# EUROPEAN PATENT APPLICATION

(11) **EP 3 584 383 A1**
(43) Date of publication of application: **25.12.2019**
(21) Application number: 18784978.1
(22) Date of filing: 23.03.2018
(51) Int. Cl.: E04C 1/40, B28B 11/00, B32B 3/08, B65G 47/00

(54) **MULTILAYER STRUCTURAL ELEMENT, METHOD AND PRODUCTION LINE FOR PRODUCTION THEREOF**

(30) Priority: 10.04.2017 RU 2017112072
(71) Applicant: Makhalin, Alexei Igorevich, Moscow 123100 (RU)
(72) Inventor: Makhalin, Alexei Igorevich, Moscow 123100 (RU)
(74) Representative: Sterlina, Tatjana
(86) International application number: PCT/RU2018/000183
(87) International publication number: WO 2018/190752

(57) **Abstract**

The invention refers to the means for monitoring and diagnostics of corrosion processes inside process vessels and pipelines.

Multi-layer construction element including outer elements and thermal insulation layer placed between them. The upper and lower surfaces of the outer elements of the multi-layer construction element are made with a longitudinal joint along the entire outer element. The multi-layer construction element additionally contains longitudinal connecting elements that are included in the joints of the upper and lower surfaces of outer elements. The multi-layer construction element is made with the possibility of both horizontal and vertical laying. Working joints for the electrical wiring duct are made in the thermal insulation layer. The outer elements can be made of glued beam, coreboard, plywood, bricks with a high degree of hollowness or stone. The thermal insulation layer can be reinforced.

A process line for the production of multi-layer construction elements, including the following interconnected elements: outer elements feeding unit, thermal insulation layer feeding unit, pressing unit, sawing unit, and removal unit for ready-made multi-layer construction elements installed on the frame. The outer elements feeding unit is equipped with a side feed conveyor for outer elements that is made in the form of a belt conveyor with the possibility of vertical orientation of outer elements during the installation on the conveyor. The outer elements feeding unit is equipped with two outer and middle guides. The thermal insulation layer feeding unit is designed to allow mixing of at least two components and supply of mixture between outer elements. The pressing unit is designed as a two-level belt conveyor. The frame in the area of the pressing unit is equipped with stands fixing the distance between the levels of a two-level belt conveyor, where each of these stands is equipped with a height adjuster of outer elements on the top. The upper level of the two-level conveyor is shorter than the lower level, and the central part of both levels is equipped with special dense stickers for the formation of the upper and lower working joints of the thermal insulation layer. The two-level belt conveyor of the pressing unit is equipped with paired thrust roller blocks that fix the outer dimensions of the multi-layer construction element. Axial roller blocks are made at the lower level of a two-level conveyor and at some distance from each other, and the first pair of thrust roller blocks is made in the area of the thermal insulation layer feeding unit. The sawing unit is made with the possibility of reciprocating motion of the saw with the speed of the conveyor belt movement. The removal unit for ready-made multi-layer construction elements is made in the form of a roller conveyor with a side unloader for ready-made multi-layer construction elements.

A method of production of multi-layer construction element including laying of outer elements, filling the space between outer elements with thermal insulation layer, aging and pressing of multi-layer construction element, and removal of finished multi-layer construction element from the process line. The outer elements are provisionally prepared by forming the upper and lower joint of each outer element. The outer elements are then fed with vertical orientation from two opposite sides. The outer elements are then fixed with guides. When the outer elements arrive at the insulation layer feeding unit, the outer elements are fixed with thrust roller blocks. Then the space between outer elements is filled with a thermal insulation layer, the components of which are pre-mixed, and the thermal insulation layer itself is fed from above. Then outer elements with a thermal insulation layer are fed into a two-level conveyor of the pressing unit, where the level of the second layer is fixed with stands, and the upper and lower levels of the conveyor forms the upper and lower working joints of the thermal insulation layer. After that, the outer elements with the thermal insulation layer are pressed for 7-10 minutes at a temperature of 20-65 °C. After that, the multi-layer construction element is fed into the sawing unit, where it is sawn to the specified lengths. The ready-made multi-layer construction elements are fed into the removal unit and then removed from the line by a side unloader.

## Description

### Field of the invention

The invention refers to construction, namely to multi-layer construction elements containing a thermal insulation layer.

### Background of the Invention

The patent of the Russian Federation for utility model No. 41321 "Beam Element" is known. IPC E04C3/12, E04B1/10. The utility model belongs to the long bearing construction elements, namely the beam elements, and can be used for the construction of various buildings. Character of the utility model. The beam element includes outer layers of wood, spacers placed between them, and inner thermal insulation layer of polyurethane foam; the ratio of the total thickness of outer layers to the thickness of the thermal insulation layer is 0.2-10. The inner surfaces of the outer layers are made with joints. At least one of the outer wooden layers can be made as two-layered or multi-layered. The upper surface of the outer and inner layers is made with profile protrusions corresponding to the joints made on the lower surface of the outer and inner layers. The outer side of the outer layers can be shaped and can be covered with finishing material.

The disadvantage of this development is that the beam element has additional inner spacing elements, shrinkage is possible due to the presence of slopes on the outer side of each outer layer, and the manufacture is complex due to the fact that it is produced with joints and protrusions.

The patent of the Russian Federation for the invention No. 2607324 "Production Line for Multi-Layer Panels" is known. IPC B28B15/00, E04C2/00, B28B11/00, B65B11/00. The production line for multi-layer panel contains the interconnected unit for feeding facing rolls into the deep profiling unit, filler laying unit, lamella loading unit, pressing unit, panel cutting unit, panel footer formation unit, and unit for panel footer packaging with polyethylene film. The above mentioned units are interconnected with the option for profiling the received facing, subsequent laying between the profiled filler facing, cutting of lamellae out of the filler and further pressing of the profiled facing together with the lamellae to the required thickness, cutting of the facing with lamellae into individual panels, formation of the footer from the individual panels and packaging of the panel footer with polyethylene film. The line is additionally equipped with a protective coating formation unit located in front of the panel footer packaging unit, including a mechanism for application of a protective coating on the formed panel footer along the length of the panel footer in the direction of its movement along the line, made in the form of a shaft with a protective roll material placed on it, and a mechanism for cutting off the protective material. The technical result is an increase in the reliability of the packaging of the formed panel footer directly in the process of its production.

The disadvantage of this development is that the production of multi-layer panels on the proposed line is difficult, and therefore productivity is not high.

The patent of the Russian Federation for the invention No. 2468159 "Multi-Layer Construction Block and Method of Its Production" is known. IPC B28B5/00, E04C1/40. A method of producing multi-layer construction blocks with a decorative front surface, including filling the form with a decorative layer from the hopper, compaction thereof, laying the main layer, compaction thereof, lifting the product on the mobile bottom of the form, pushing it out of the form, removal of the finished product from the form and its aging that is distinguished by the fact that on the bottom of the form, the sides of which, forming the upper and lower foundation of the block, are made expanding to the bottom and are equipped with mobile joint formers and protrusion formers, a pallet and a flexible matrix filled with plastic concrete for the front layer are stacked, then the form is filled with a semi-dry concrete mixture with the use of a volumetric dosing device or up to the bottom section of a form window, compacted, a thermal insulation layer made of expanded polystyrene foam is inserted and both layers are penetrated with connecting rods, bearing layer protrusion formers are pulled out, a semi-dry concrete mix is filled up to the top of the form, the form is closed with a cover that features limited vertical free travel, compacted, then one side forming the end of the block is removed or moved, and the product is pushed with a pallet by the opposite mobile side forming the other end of the block, and then the product with a pallet and a flexible matrix is sent for aging. After achieving a certain strength of concrete, the flexible matrix is removed.

The disadvantage of this development is a large number of labour-intensive operations and as a consequence, the complexity of production and high time costs.

### Disclosure of the Invention

The purpose of the proposed invention is to create a simple and convenient multi-layer construction element to combine in structures that results in a minimum shrinkage with the possibility of using a multi-layer construction element for building bearing walls, internal partitions, floors and ceilings, as well as the production of ready-made walls with all the working holes by gluing and fastening in the production; a high-performance process line for multi-layer construction elements using well-known equipment with low energy consumption, as well as the possibility of supplying outer vertically oriented elements, and continuous and low-cost method of manufacturing multi-layer construction elements.

The specified purpose is achieved by including outer elements and thermal insulation layer placed between them into the multi-layer construction element. The upper and lower surfaces of the outer elements of the multi-layer construction element are made with a longitudinal joint along the entire outer element. The multi-layer construction element additionally contains longitudinal connecting elements that are included in the joints of the upper and lower surfaces of outer elements. The multi-layer construction element is made with the possibility of both horizontal and vertical laying. Working joints for the electrical wiring duct are made in the thermal insulation layer. The outer elements can be made of glued beam, coreboard, plywood, bricks with a high degree of hollowness or stone. The thermal insulation layer can be reinforced. A process line for the production of multi-layer construction elements, including the following interconnected elements: outer elements feeding unit, thermal insulation layer feeding unit, pressing unit, sawing unit, and removal unit for ready-made multi-layer construction elements installed on the frame. The outer elements feeding unit is equipped with a side feed conveyor for outer elements that is made in the form of a belt conveyor with the possibility of vertical orientation of outer elements during the installation on the conveyor. The outer elements feeding unit is equipped with two outer and middle guides. The thermal insulation layer feeding unit is designed to allow mixing of at least two components and supply of mixture between outer elements. The pressing unit is designed as a two-level belt conveyor. The frame in the area of the pressing unit is equipped with stands fixing the distance between the levels of a two-level belt conveyor, where each of these stands is equipped with a height adjuster of outer elements on the top. The upper level of the two-level conveyor is shorter than the lower level, and the central part of both levels is equipped with special dense stickers for the formation of the upper and lower working joints of the thermal insulation layer. The two-level belt conveyor of the pressing unit is equipped with paired thrust roller blocks that fix the outer dimensions of the multi-layer construction element. Axial roller blocks are made at the lower level of a two-level conveyor and at some distance from each other, and the first pair of thrust roller blocks is made in the area of the thermal insulation layer feeding unit. The sawing unit is made with the possibility of reciprocating motion of the saw with the speed of the conveyor belt movement. The removal unit for ready-made multi-layer construction elements is made in the form of a roller conveyor with a side unloader for ready-made multi-layer construction elements. A method of production of multi-layer construction element including laying of outer elements, filling the space between outer elements with thermal insulation layer, aging and pressing of multi-layer construction element, and removal of finished multi-layer construction element from the process line. The outer elements are provisionally prepared by forming the upper and lower joint of each outer element. The outer elements are then fed with vertical orientation from two opposite sides. The outer elements are then fixed with guides. When the outer elements arrive at the insulation layer feeding unit, the outer elements are fixed with thrust roller blocks. Then the space between outer elements is filled with a thermal insulation layer, the components of which are pre-mixed, and the thermal insulation layer itself is fed from above. Then outer elements with a thermal insulation layer are fed into a two-level conveyor of the pressing unit, where the level of the second layer is fixed with stands, and the upper and lower levels of the conveyor forms the upper and lower working joints of the thermal insulation layer. After that, the outer elements with the thermal insulation layer are pressed for 7-10 minutes at a temperature of 20-65°C. After that, the multi-layer construction element is fed into the sawing unit, where it is sawn to the specified lengths. The ready-made multi-layer construction elements are fed into the removal unit and then removed from the line by a side unloader.

### Embodiment of the Invention

The essence of the invention is explained in the drawings, where:
Figure 1 shows schematic representation of a multi-layer construction element with a connecting element.
Figure 2 shows schematic representation of a process line for multi-layer construction elements.
Figure 3 shows the outer elements feeding unit and the thermal insulation layer feeding unit.
Figure 4 shows a fragment of the outer elements feeding unit, the thermal insulation layer feeding unit, and a fragment of the pressing unit.
Figure 5 shows a fragment of the pressing unit, the sawing unit, and a fragment of the removal unit.
Figure 6 shows a fragment of the pressing unit, the sawing unit, and the removal unit.

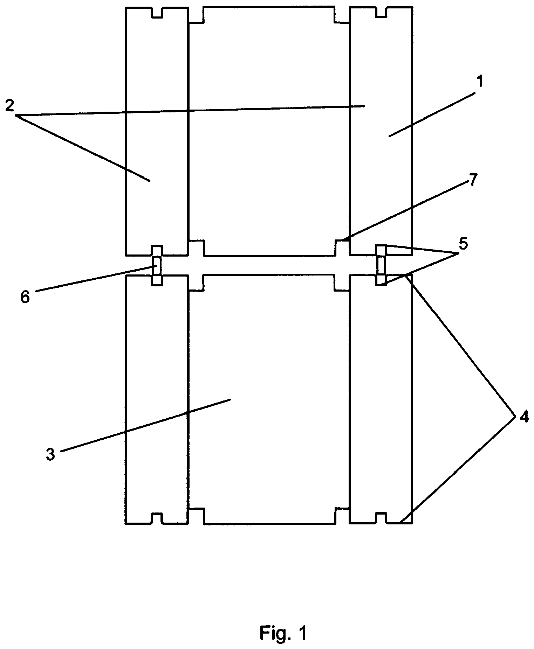

Multi-layer construction element (1) includes outer elements (2) and thermal insulation layer (3) placed between them made, for example, of polyurethane foam, polystyrene, polystyrene foam, urea formaldehyde foam, polycarbonate (polyurea). Due to the unique properties of these materials, thermal insulation layer (3) easily takes on the desired shape and is an excellent thermal and sound insulation. The materials used for the thermal insulation layer are also resistant to different weather conditions. The upper and lower surface (4) of the outer elements (2) of the multi-layer construction element (1) is made with a longitudinal joint (5) along the entire outer element (2). The multi-layer construction element (1) additionally contains longitudinal connecting elements (6) that are included in the joints (5) of the upper and lower surface (4) of outer elements (2). The connecting element (6) allows for easy formation of a construction structure of multi-layer construction elements (1) without additional fastening. Multi-layer construction element (1) is made with the possibility of both horizontal and vertical laying, which gives new opportunities in the design and construction. When gluing multi-layer construction elements (1) to each other, e.g. a two-component polyurethane adhesive is used, which allows for achievement of a continuous thermal circuit, including in the corners of the structure. When the bottom layer of the masonry is heated, warm air rises freely over the entire height of the wall and evenly warms its entire surface. Working joints (7) for the electrical wiring duct are made in the thermal insulation layer (3). The outer elements (2) can be made of glued beam, coreboard, plywood, bricks with a high degree of hollowness, or stone. Outer elements (2) of multi-layer construction element (1) do not require additional external finishing, which significantly reduces the facility commissioning time and reduces the cost of finishing works. The thermal insulation layer (3) can be reinforced. Reinforcement is performed, for example, with wooden, composite crosspieces, gratings made of metal, composite, basalt plastic fittings, composite, plastic gratings, metal shavings, etc. (see Fig. 1).

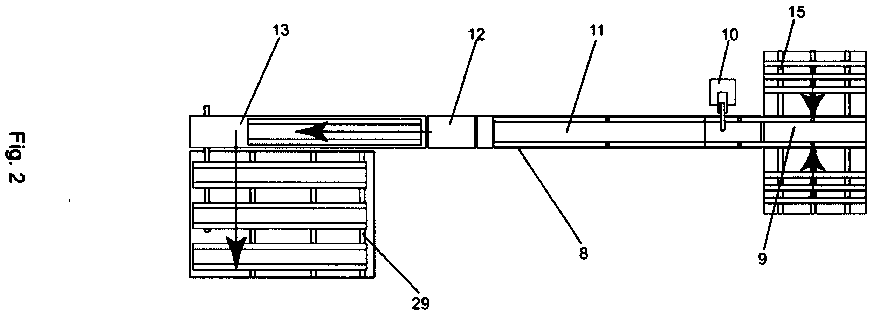

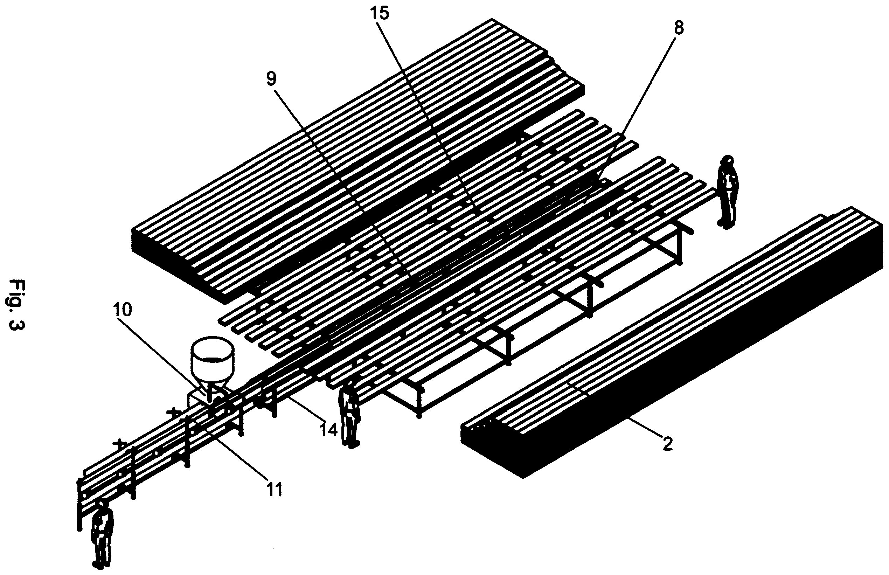

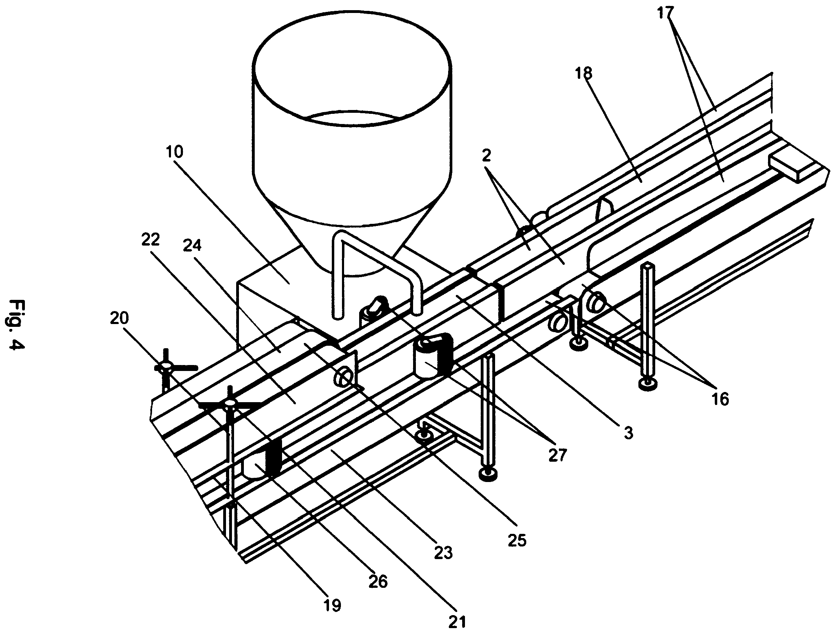

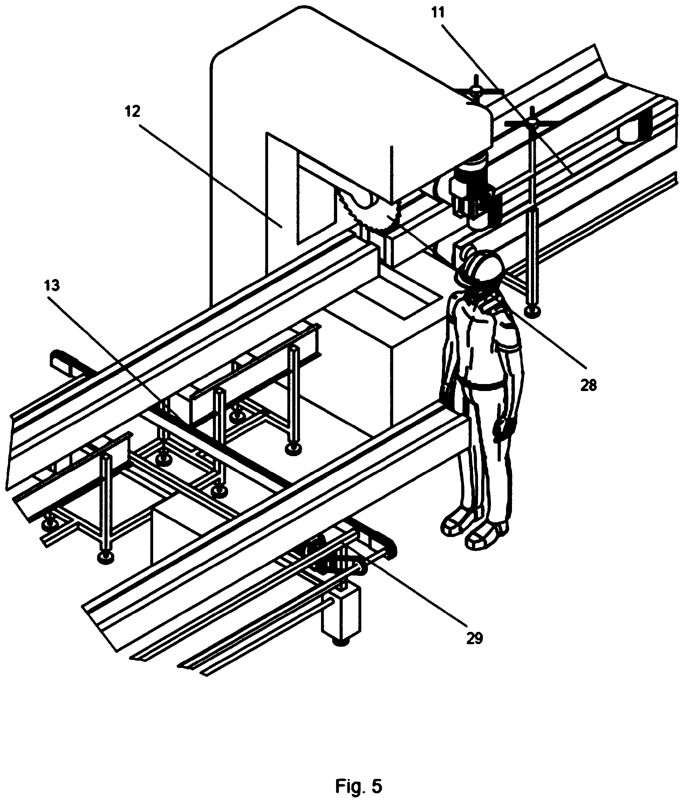

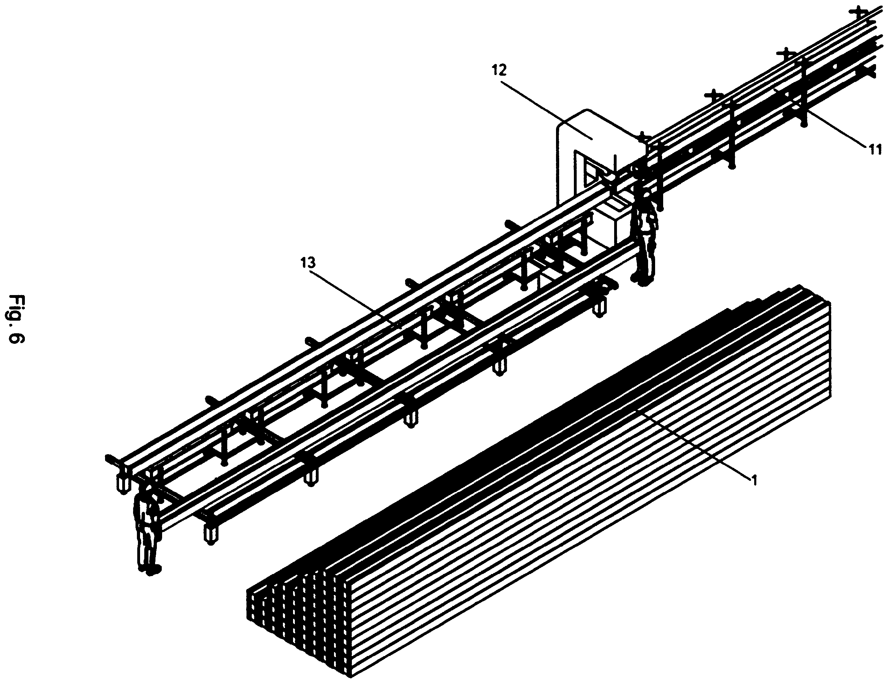

Process line (8) for the production of multi-layer construction elements (1), including the following interconnected elements: outer elements feeding unit (9), thermal insulation layer feeding unit (10), pressing unit (11), sawing unit (12), and removal unit (13) for ready-made multi-layer construction elements (1) installed on frame (14). Frame (14) is made of machine-tool aluminium, which makes the construction easier and ensures high precision of assembly. The outer elements feeding unit (9) is equipped with a side feed conveyor (15) for outer elements (2) made in the form of a belt conveyor (16) with the possibility of vertical orientation of outer elements (2) during the installation on the conveyor. The side feed conveyor (15) is made in the form of a sequence of belt conveyors (16), with possibility of feeding of outer elements (2) of different lengths and overturning unit for outer elements (2) from horizontal to vertical position. The outer elements feeding unit (9) is equipped with two outer guides (17) and middle guide (18). Outer guides (17) limit the outer elements (2) from the outside, and the inner guide (18) fixes the distance between the outer elements (2), and determines the width of the thermal insulation layer (3). The thermal insulation layer feeding unit (10) is designed to allow for mixing of at least two components and supply of mixture between outer elements (2). For mixing and supply of thermal insulation layer (3), a dosing unit with a mixer is used. Thermal insulation layer (3) is fed in liquid form, and its foaming and solidification takes place in the pressing unit (11). The pressing unit (11) is made in the form of a two-level belt conveyor (19). The upper level of the two-level conveyor belt (22) fits tightly to the outer elements (2), thus limiting and forming the top layer of thermal insulation (3). The frame (14) in the area of the pressing unit (11) is equipped with stands (20) fixing the distance between the levels of two-level belt conveyor (19), where each of these stands (20) is equipped with a height adjuster of outer elements (21) on the top. The upper level of the two-level conveyor (22) is shorter than the lower level (23) to provide a platform for the thermal insulation layer (10) on the lower level of the two-level conveyor (23), and the central part (24) of both levels (22) and (23) is equipped with special dense stickers (25) for the formation of the upper and lower working joints (7) of the thermal insulation layer. Special dense stickers (25) can be made, for example, of PVC. The two-level belt conveyor (19) of the pressing unit (11) is equipped with paired thrust roller blocks (26) that fix the outer dimensions of the multi-layer construction element (1). Thrust roller blocks (26) are located at the lower level (23) of the two-level conveyor and at a certain distance from each other, and the first pair of thrust roller blocks (27) is located in an area of thermal insulation layer feeding unit (10) for fixing outer elements (2) as the exit feeding unit (9) and transition to thermal insulation layer feeding unit (10). Sawing unit (12) is made with the possibility of reciprocating motion of saw (28) with the speed of the conveyor belt movement. Sawing unit (12) moves horizontally, in the same direction and with the belt speed in pressing unit (11); saw (28) makes a vertical movement from top to bottom for sawing multi-layer construction elements (1), then from bottom to top, returning the saw to its original position; sawing unit (12) goes back against the movement of the belt in pressing unit (11) and is ready for the next cut. Removal unit (13) for ready-made multi-layer construction elements (1) is made in the form of a roller conveyor (29) with a side unloader (30) for ready-made multi-layer construction elements (1). (See Fig. 2, 3, 4, 5, 6).

A method of production of multi-layer construction element (1), including laying of outer elements (2), filling the space between outer elements (2) with thermal insulation layer (3), aging and pressing of multi-layer construction element (1) and removal of finished multi-layer construction element (2) from the process line (8). The outer elements (2) are provisionally prepared by forming the upper and lower joint (5) of each outer element (2). The outer elements (2) are then fed with vertical orientation from two opposite sides. The outer elements (2) are then fixed with guides (17) and (18). When the outer elements (2) arrive at the insulation layer feeding unit (10), the outer elements (2) are fixed with thrust roller blocks (26). Then the space between outer elements (2) is filled with a thermal insulation layer (3), the components of which are pre-mixed, and the thermal insulation layer (3) itself is fed from above. Then outer elements (2) with a thermal insulation layer (3) are fed into the two-level conveyor (19) of the pressing unit (11), where the level of the second layer is fixed with stands (20), and the upper (22) and lower (23) levels of the conveyor forms the upper and lower working joints of the thermal insulation layer (7). After that, the outer elements (2) with the thermal insulation layer (3) are pressed for 7-10 minutes at a temperature of 20-65 °C. After that, the multi-layer construction element (1) is fed into the sawing unit (12), where it is sawn to the specified lengths. The ready-made multi-layer construction elements (1) are fed into the removal unit (13) and then removed from the line by a side unloader (30). (See Fig. 2).

The following can be used for implementation of the proposed multi-layer construction element, a way of its production and a process line for the production of a multi-layer construction element:
- the room featuring dimensions of no more than 50x18 meters,
- any low/high pressure filling machine with metering unit and mixer,
- air compressor.

The developers of the proposed multi-layer construction element, a way of production thereof and a process line for the production of a multi-layer construction element have performed tests of the multi-layer construction element that produced the following results:
- compression strength: from 20 kgf/cm²,
- bending strength: Ru32 over 25 MPa,
- layer adhesive strength: from 0.226 MPa,
- design heat transmission resistance: R over 10.

The advantages of the proposed method of corrosion processes control are the following:
- low cost of the multi-layer construction element,
- possibility to use multi-layer construction element without additional insulation, without steam or wind protection films,
- high speed of building the structures made of multi-layer construction element,
- possibility of vertical laying of multi-layer construction element during building,
- dense connection of outer elements due to self-adhesion,
- a variety of materials for outer elements,
- high performance of the process line,
- simplicity of process line equipment,
- simplicity of process line equipment maintenance,
- low power consumption of the process line,
- possibility to feed outer elements with vertical orientation,
- compactness of the process line placement,
- performance of the process line from 24,000 to 100,000 m² per year,
- use of outer elements with a thickness from 18 to 60 mm and with a height from 150 to 400 mm.

The purpose, i.e. creation of a simple and convenient multi-layer construction element to combine in the structures that results in a minimum shrinkage with the possibility of using a multi-layer construction element for building bearing walls, internal partitions, floors and ceilings, as well as the production of ready-made walls with all the working holes by gluing and fastening in the production; a high-performance process line for multi-layer construction elements using well-known equipment with low energy consumption, as well as the possibility of supplying outer vertically oriented elements, and continuous and low-cost method of manufacturing multi-layer construction elements.

The data listed above confirm the industrial applicability of the proposed multi-layer construction element, the way of production thereof and the process line for the production of the multi-layer construction element.

### List of positions:

- 1.: multi-layer construction element,
- 2.: outer element,
- 3.: thermal insulation layer,
- 4.: upper and lower surface of outer elements,
- 5.: longitudinal joint of upper and lower surface of outer elements,
- 6.: connecting elements,
- 7.: working joints in the thermal insulation layer,
- 8.: process line,
- 9.: outer element feeding unit,
- 10.: thermal insulation layer feeding unit,
- 11.: pressing unit,
- 12.: sawing unit,
- 13.: removal unit,
- 14.: frame,
- 15.: side feed conveyor for outer elements,
- 16.: belt conveyor,
- 17.: outer guide,
- 18.: middle guide,
- 19.: two-level belt conveyor,
- 20.: stands,
- 21.: outer element height regulator,
- 22.: upper level of the two-level conveyor,
- 23.: lower level of the two-level conveyor,
- 24.: central part of the two-level conveyor,
- 25.: special dense sticker,
- 26.: paired thrust roller blocks,
- 27.: first pair of thrust roller blocks,
- 28.: saw,
- 29.: roller conveyor,
- 30.: side unloader,

## Claims

1. Multi-layer construction element including outer elements and thermal insulation layer placed between them; wherein,
the upper and the lower surface of the outer elements of the multi-layer construction element is made with a longitudinal joint along the entire outer element, and the multi-layer construction element additionally contains longitudinal connecting elements included in the joints of the upper and the lower surface of the outer elements of the multi-layer construction element, and the multi-layer construction element is made with the possibility of both horizontal and vertical laying, and the thermal insulation layer is made with working joints for the electrical wiring duct.

2. Multi-layer construction element of claim 1, wherein the outer elements can be made of glued beam, coreboard, or plywood.

3. Multi-layer construction element of claim 1, wherein the external elements can be made of bricks with a high degree of hollowness.

4. Multi-layer construction element of claim 1, wherein the outer elements can be made of stone.

5. Multi-layer construction element of claim 1, wherein the thermal insulation layer can be reinforced.

6. A process line for the production of multi-layer construction elements, including the following interconnected elements: outer elements feeding unit, thermal insulation layer feeding unit, pressing unit, sawing unit, and removal unit for ready-made multi-layer construction elements installed on the frame,
wherein,
the outer elements feeding unit is equipped with a side feed conveyor for outer elements made in the form of a belt conveyor with the possibility of vertical orientation of outer elements during the installation on the conveyor, and the outer elements feeding unit is equipped with two outer guides and the middle guide, and the thermal insulation layer feeding unit is made with the possibility of mixing at least two components and supply of mixture between outer elements, and the pressing unit is made in the form of the two-level belt conveyor, and the frame in the pressing unit area is equipped with stands fixing the distance between the levels of the two-level belt conveyor, where each of these stands is equipped with a height adjuster of outer elements on the top, and the top level of the two-level conveyor is made shorter than the bottom one, and the central part of both levels is equipped with special dense stickers for formation of the upper and lower working joints of the thermal insulation layer, and the two-level belt conveyor of the pressing unit is equipped with the paired thrust roller blocks fixing external dimensions of the multi-layer construction element, and the thrust roller blocks are made at the lower level of the two-level conveyor and at a certain distance from each other, and the first pair of thrust roller blocks is made in the area of thermal insulation layer feeding unit, and the sawing unit is made with the possibility of reciprocating motion of the saw with speed of movement of the conveyor belt, and the removal unit for ready-made multi-layer construction elements is made in the form of a roller conveyor with a side unloader for ready-made multi-layer construction elements.

7. A method of production of multi-layer construction element including laying of outer elements, filling the space between outer elements with thermal insulation layer, aging and pressing of multi-layer construction element, and removal of finished multi-layer construction element from the process line,
wherein,
the outer elements are provisionally prepared by forming the upper and lower joint of each outer element; outer elements are then fed with vertical orientation from two opposite sides, the placed outer elements are then fixed with guides, and when the outer elements arrive at the insulation layer feeding unit, the outer elements are fixed with thrust roller blocks, after which the space between the outer elements is filled with a thermal insulation layer, the components of which are pre-mixed, and the thermal insulation layer itself is fed from above, and then the outer elements with the thermal insulation layer are fed into a two-level conveyor of the pressing unit, where the level of the second layer is fixed with stands, and the upper and lower level of the conveyor form the upper and lower working joints of a thermal insulation layer, then the outer elements with a thermal insulation layer are pressed for 7-10 minutes at temperature of 20-65 °C, after which the multi-layer construction element is fed to the sawing unit, where they are sawn into the set pieces, after which the ready-made multi-layer construction elements are fed into the removal unit and then removed from the line by a side unloader.
